# EUROPEAN PATENT SPECIFICATION

(11) **EP 2 698 248 B1**
(45) Date of publication and mention of the grant of the patent: **04.07.2018**
(21) Application number: 13192061.3
(22) Date of filing: 17.05.2005
(51) Int. Cl.: B32B 17/06, B32B 7/12, B32B 17/10, B32B 27/06, C03B 23/047, C03B 23/07, C03B 17/06, C03C 17/32, C03C 17/30, H01J 9/00, G02F 1/1333

(54) **Process for composite layered material for electronic optical devices**
Verfahren für mehrlagiges Verbundmaterial für elektronische optische Vorrichtungen
Procédé pour matériau composite en couche pour dispositifs optiques électroniques

(30) Priority: 19.05.2004 US 572227 P
(43) Date of publication of application: 19.02.2014
(62) Divisional of application: 05749817.2
(73) Proprietor: DSM IP Assets B.V., 6411 TE Heerlen (NL)
(72) Inventor: Stroeks, Alexander Antonius Marie, 6100 AA Echt (NL); Bulters, Markus Johannes Henricus, 6160 AA Echt (NL); Hornman, Hans Hubertus Henricus, 6160 AA Echt (NL)
(74) Representative: DSM Intellectual Property

(56) References cited:
- WO-A-00/41978
- GB-A- 1 319 846
- US-A- 2 910 805
- US-A1- 2002 136 907
- US-A1- 2004 071 960

## Description

The invention relates to a process for preparing a composite layered material comprising a glass film and a polymer film adhered to at least one side of the glass film. The invention also relates to a composite layered material comprising a glass film and a polymer film adhered to at least one side of the glass film, more particular to a composite layered material, which is suitable for use in electronic equipment, especially for use as barrier layer in optical display systems.

Such a process is known from EP1137607. The known process comprises a draw-down-step, wherein the glass film is produced from a glass melt and drawn down by a drawing unit, a pretreatment step, wherein the surface of the glass film is cleaned, or cleaned and modified, to provide sufficient adhesion, a processing step wherein a polymer is applied to the pretreated glass film and a step wherein the composite layered material is partitioned into smaller parts. In most of the examples the polymer layer is applied at one face, but application of a polymer layer to both faces is also mentioned to be possible. The polymer layer is applied as a liquid phase. For the liquid phase, polymer solutions as well as (UV-curable) coatings optionally combined with adhesion promoters are mentioned. As suitable methods for application of the coatings are mentioned pouring, rolling, spraying and dipping.

A disadvantage of the known process is that it is laborious and requires cleaning of the glass prior to application of the polymer liquid phase. A further disadvantage is that the composite layered materials obtained with the process of EP1137607 apparently are sensitive to breakage. To improve the breakage strength the side edges of the composite layered material should also be coated. In the process of EP1137607 performed as a continuous process the side edges parallel to the drawing direction are coated. After partitioning the composite layered material in smaller parts also the formed new edges are coated.

The composite layered materials obtained with the known process are said to be very suitable for the production of LCD- and OLED (optical light emitting display)- displays. In these applications, the trends go to towards ever-increasing demands with regard to performance and increasing functionality and design freedom, which are reflected in requirements for increased flexibility and weight reduction. For example, various applications such as touch screens and OLEDs, which are extremely sensitive to oxygen and water, require shielding or barrier materials having very low oxygen and water permeability combined with high flexibility and transparency. For the barrier materials used in OLEDs the requirement for oxygen permeability is in the order of a few µl/m²/day or lower at ambient conditions (one bar air and 20 °C) and for the water permeability in the order of a few µg/m²/day at ambient conditions.

The composite layered material as described in EP1137607 should comprise a glass foil with a thickness of 10 to 500 µm, and a plastic foil with a thickness of 1 to 200 µm. However, it is noted that the lowest thickness that is employed in the examples in EP1137607 only 50 µm. Though composite layered materials consisting of such glass films and plastic films combine the good barrier properties of the glass layer with enhanced mechanical properties due to the polymer layer, the known composite layered materials can not meet the high demands of today, in particular the increased demands for flexibility and reduced brittleness require further improvement.

A logical step for improving the flexibility of the composite materials and reducing the weight thereof would be reduction of the thickness of the glass layers, preferably to below 20 µm. However, a limitation of the process of EP1137607 is that upon reducing the thickness of the glass film to below 20µm, e.g. to 15 or 10µm, the process suffers even more from the brittleness of the glass film and the difficult handability thereof and it is not possible to produce a composite layered material with a sufficient integrity of the glass layer therein and with good oxygen barrier properties, let alone a composite layered material which has sufficient oxygen barrier properties for the intended use in LCDs and OLEDs.

Another patent which describes composite layered materials with a glass foil having a very low thickness is GB-1319846. The composite layered materials in GB-1319846 comprise a glass foil having a thickness of 4 to 200 µm, and plastic foils having a thickness of 2 to 200 µm. The plastic films may be applied by various methods, such as extrusion, coating, or applying a film, optionally combined with an adhesive layer and/or an adhesion-promoting agent. The plastic foil may be on one or on both sides. As applications for these known composite layered materials are mentioned drawing films, packaging materials and protective covers for paintings. The composite layered materials are prepared with processes involving application of extruded layers of polymer on a so-called traveling web of glass foil (minimum thickness mentioned in the examples is 20 µm) or application of a polymer film on a stationary glass foil (minimum thickness mentioned 50 µm). These processes are mentioned in the examples in GB-1319846. GB-1319846 itself does not give further details about the method or process by which the glass foils are prepared or pretreated before the polymer film is applied. Also the word traveling web is not specified, but according to E.D. Cohen and E.B. Gutoff in the article "Coating Process, Survey", Kirk-Othmer Encyclopedia of Chemical Technology, online posting date April 19, 2002, application of a coating to a traveling web or substrate is a standard coating technology for which many coating methods can be applied. A common aspect in these methods is that the web or substrate is traveling or moving, e.g. by taking the web from a roll and/or passing it over transport means such as rollers. Such a process shows many similarities with that of EP1137607.

GB-1319846 furthermore mentions that "recently" it had become possible to produce glass foils with a thickness of not more than 5 µm, which are highly flexible. It also mentions that such foils are very brittle and have low tensile strength. However, it does not provide any details on the method of producing the glass, how to handle the glass or how to apply the polymer layer on it, let alone a method for producing composite layered materials which have improved flexibility and can meet the barrier requirements needed for LCD and OLED applications.

Composite layered materials comprising very thin layers of glass and plastic materials and having very good oxygen barrier properties are mentioned in the publication by P.E. Burrows, et al. in the proceedings of Plastic Organic Emitting Displays, MRS Spring Meeting, April 2002 and which is available from the internet http://www.vitexsys.com/paper/MRS02%20.pdf. These composite layered materials consist of alternating layers of glass and plastic, wherein the glass layers have a thickness in the order of several to hundreds of nm. These glass layers were prepared by sputtering or vacuum deposition techniques upon a polymer substrate. A drawback for all these deposition technologies is the fact that one never ends up with a perfect glass layer that gives complete coverage of the polymer substrate. It seems impossible to circumvent little defects in the deposition layer influencing the barrier performance in a negative manner. To arrive at good barrier properties, these materials have to consist of several repeating alternating layers of glass and plastic.

Therefore, there is still a need for processes for preparing barrier materials that are suitable for use in LCD and OLED applications and which processes are less laborious than the known processes. Furthermore, there is still a need for composite layered materials having improved flexibility compared to the known composite layered materials with glass films of 50 µm as of EP1137607, meanwhile having the same good oxygen barrier properties of these materials, and for a process with which these materials can be prepared.

The first aim of the present invention is therefore to provide a process for preparing a barrier material that is suitable for use in LCD and OLED applications and which is less laborious than the known processes.

The second aim of the present invention is to provide a composite layered material which is suitable for use in optical devices and having improved flexibility compared to EP1137607 in combination with good oxygen barrier properties and to provide a process for the production of such composite layered material.

This first aim has been achieved with the process according to the invention comprising
- melting and drawing an inorganic glass material to form a virgin contact-free glass film, and, subsequently,
- applying a polymer film to at least one side of the virgin contact-free glass film.

A virgin contact-free glass film is herein understood to be a glass film that is obtained by melting a glass material from which the glass is produced (denoted as native glass) and drawing the molten glass, thereby forming a thin (solid or semisolid) glass film and which film is not touched mechanically or supported mechanically other than by the native glass itself, to which it is attached, or in contact with any other material at neither side of the glass film, i.e. neither at the same side nor at the opposite site of the glass film where the polymer is to be applied, prior to application of the polymer layer to the glass film, with the only exception of a liquid floating bath, for example of a melt of a metal, which liquid floating bath might be in contact with the glass film at the side opposite to the side to which the polymer film is applied. In other words, after the glass is melted, a glass film is formed by drawing; then first the polymer is applied. Only after the polymer is applied, the glass surface covered with polymer and/or the opposite side thereof is allowed to be mechanically touched or supported, again with the only exception of premature one-sided contact with a liquid floating bath.

After the polymer film is applied the resulting composite layered material can be touched by mechanical equipment, for example by the means for drawing the film or by cutting equipment, and be collected.

The effect of the process according to the invention, which does not comprise a cleaning step of the glass film prior to application of the polymer film, is that the adhesion of the polymer film is as good as in the known process, which comprises a cleaning step. The advantage of the inventive process is therefore that it is less laborious than the known process.

A further advantage of the inventive process is that it allows the production of composite layered material with a glass layer with lower thickness than is possible with the known process of EP1137607 and resulting in a composite layered material with improved flexibility in combination with very good oxygen barrier properties.

The second aim of the invention has been achieved with the process according to the invention wherein the virgin contact-free glass film has a thickness of less than 20 µm.

The effect of this embodiment of the process according to the invention is that a composite layered material is obtained which shows improved flexibility compared with the known composite layered materials comprising a glass film with a thickness of 50 µm, while still showing oxygen barrier properties comparable with those of composite layered materials comprising a glass layer with a thickness of 50 µm. Due to the improved flexibility of the composite layered material according to the invention, flattening of a bent shape thereof is not a problem. Furthermore, due to said flexibility it is also possible to produce the composite layered material according to the invention as a continuous sheet, which can be winded on a roll without damaging effects on the material or the barrier properties thereof. Composite layered materials with this combination of properties cannot be obtained using glass films with a thickness of less than 20 µm in the known process of EP1137607.

Still more preferably the thickness of the virgin contact-free glass film is between 1 and 12 µm and most preferably the thickness is between 5 and 10 µm.

The process according to the invention can be carried out in different manners. In one embodiment of the process according to the invention, the virgin contact-free glass film has a flat shape.

One advantage of this embodiment is that it is much easier than in the known process of EP1137607 to apply a polymer layer in the form of a coating on both sides of the glass film, eventually simultaneously. It is also possible to apply different coatings at each sides, as well as to integrate a double coating step wherein first a primary layer and subsequently a secondary polymer film is applied on top of the first, all before the composite layered material is touched by mechanical equipment.

Another advantage of this embodiment is that this process results in a composite layered material in a flat form, which can be produced in long length. This makes this process highly suitable to be applied in a continuous form.

Surprisingly, and despite the known brittleness of very thin glass foils, such a continuous process is very stable and does not suffer from premature breakage of the glass. Moreover, the composite layered material obtained in such a process shows the enhanced flexibility, described before, already in a very early stage after the polymer layer is applied to the virgin contact-free glass film, allowing the composite layered material after being formed to be collected for example by winding.

Performing the inventive process in a continuous manner has the further advantage that it can easily be combined with high speed coating processes for applying the polymer layer, such as coating processes involving radiation curable processes. Thus, high production speeds can be obtained.

The embodiment of the process according to the invention wherein the virgin contact-free glass film has a flat shape may be carried out by any method that is suitable for that purpose. This embodiment typically has a glass source with produces a glass melt with a linear cross-section.

The glass source may, for example, be a furnace with a melt exit having the shape of a slit or linear die, and wherein the inorganic glass material after it is melted in the furnace, is passed through the slit and subsequently drawn to form a flat film. Suitably, to prepare the melt and pass it through a slit, conventional techniques such as used to prepare flat glass panels can be used. Any kind of means, e.g. furnaces and ovens, used for melting glass and suitable for this purpose can be used.

Alternatively, the glass source may, for example, be a glass plate, which is melted and drawn. The glass plate may be melted, for example, by electrical and/or inductive heating. The use of a glass plate eliminates the need of a slit or die.

To prepare a sufficient thin glass film, the glass melt, after being formed, and optionally having passed the slit, must be drawn. The easiest way is to draw-down the glass melt. By drawing the film with a higher speed than it passes the slit, the thickness of the melt layer is reduced. If this draw-down is fast enough the thickness can be reduced to below 20 µm when so required. By reducing the thickness the cooling also goes faster. Care must be taken that in between the slit and the means used for the draw-down there is enough space to allow the melt film to be reduced in thickness, to cool and to allow the polymer film to be applied. In this embodiment the polymer is applied at a position in between the melt source and the position wherein the composite layered material is drawn

The composite layered material and thereby the glass film may be drawn by any draw unit that is suitable for that purpose. The draw unit may suitably have the form of one roller, with the composite layered material passing over it, or may consist, for example, of two rollers having the composite layered material clamped in between them.

In another embodiment of the process according to the invention, the virgin contact-free glass film has a cylindrical shape. This embodiment has the advantage, that for producing the composite layered material according to the invention, one can already start with a simple set-up and does not need complicated structures involving large furnaces or ovens.

This embodiment can be carried out by using a glass tube as the glass source. In this embodiment, the tube of inorganic glass material used to form the melt (i.e. the native glass material) from which the virgin contact-free glass film is formed, which tube is denoted herein as native tube and the tube formed by the cylindrical shape of the virgin contact-free glass film, which tube is denoted herein as virgin tube, together form one integral tube.

A suitable method for producing a virgin contact-free glass film with a cylindrical shape is the so-called "mechanical cylinder blowing process of Lubbers style". This method was already invented in 1902. Matsunami has modified this method for the production of thin glass (1.5∼50 µm) which modified process is indicated by the name "Matsunami style mechanical blowing process". Matsunami mentioned that it is an important and difficult point of the specialized process to make a plate by securing the cylindrical form and blowing air into thin film glass at the same time. However it is not mentioned how to realize such a process. Details on this modified method are not given. In particular there is no mentioning of the handling problems with glass films having a thickness of less than 20 µm and how these problems can be overcome. Moreover, in the overview of glass properties only glass with a thickness of 50 µm is included. There is no information on composite materials consisting of plastic films and such thin glass films, let alone any process by which these can be made. Matsunami does neither mention the problem according to the present invention. There is no mention or suggestion that their process can be used to solve this problem, let alone the solution according the process of the present invention.

In this embodiment of the inventive process, using a glass tube as the glass source, the inorganic glass material may be melted by using, for example, a gas burner, or an electrical heating wire. For example, any burner that has a heating capacity sufficient to melt the glass, can be used. For that purpose, a circular section of the glass tube is melted. After the melting step the tube ends are pulled away from each other, such that a glass film of sufficient low thickness is formed. When so needed, a glass film with a thickness below 20 µm can be formed. Then the movement of the tube ends can be stopped, the ends can fixed in their position and the thin glass film can be allowed to cool. Subsequently polymer film is applied. The composite layered material formed in that way can be collected by cutting the cylindrical thin part of the tube provided with the polymer film from the rest of the glass tube, cutting open the obtained cylinder-shape of composite layered material and collecting said material by flattening or rolling up.

Alternatively, the melting with the burner or furnace can be continued during pulling of one of the tube ends, thereby continuously progressing the circular melted section. By allowing the circular melt section to progress in one direction and by pulling away the other end of the tube it is possible to perform this embodiment of the process in a continuous manner. For that purpose the composite layered material near the tube end that is pulled away is folded into a flattened layer. After flattening the composite layer material may subsequently be collected, for example, by cutting in parts and stacking the parts, by folding or by winding.

In a preferred embodiment a pressure is applied inside the cylindrical shape. This has the advantage that it is easier and less critical to obtain a virgin contact-free film with thickness of less than 20 µm and that the thickness of the virgin contact-free glass film can be better controlled. This latter is reflected in that the thickness of the virgin contact-free glass film is better reproducible and more constant and even over the glass film.

This preferred embodiment might be performed, for example, by closing the native glass tube at both side and applying a pressure inside the native tube and subsequently maintaining or adjusted the pressure inside the integral tube. The pressure is preferentially regulated during the melting and drawing step to control the thickness of the virgin contact-free glass film.

Alternatively, the native glass tube is not completely closed but is closed to such an extent (denoted as air-tight) that an airflow can be applied inside the tube which allows the pressure inside the tube to be set at a preselected level or to be regulated. In the process wherein the process is carried out in a continuous manner and the tube is drawn at one side, the tube may be closed at that one side by flattening the composite layer material produced from the virgin tube and the polymer layer applied thereon.

More preferably, the native tube has a first diameter, the virgin tube has a second diameter, which second diameter is larger than the first diameter, and wherein the second diameter is controlled by the pressure inside the integral part. This embodiment, wherein the second diameter is larger than the first diameter has the advantage that a thinner glass film is obtained without the need of extending the puling equipment.

In the process according to the invention the polymer film may be applied to one side or to both sides of the glass film. In the embodiment of the process wherein a glass tube is used, the polymer film is preferably applied at the outside of the tube. In the embodiment of the process wherein a flat glass film is produced by draw-down in a continuous manner, the polymer film is preferably applied simultaneously at both sides of the glass film. The advantage thereof is that this results in a more stable process.

In the process according to the invention, the polymer film may be applied by any method that is suitable for that purpose. Methods that can be used are, for example, pouring, rolling, dipping, spraying, laminating, winding, or die -extrusion.

In the process according to the invention the polymer film may also be applied by applying a polymer in any form that is suitable for that purpose. The polymer may be applied, for example, in the form of a polymer film, or in the form of a polymer melt, a polymer solution, or a coating composition, which polymer melt, polymer solution, or coating composition is subsequently converted into a polymer film. For this conversion, the polymer melt can be converted into a polymer film by cooling. The polymer solution, which typically comprises a polymer dissolved in a solvent, can be converted into a polymer film by evaporation of the solvent. The coating composition, which typically comprises components which constitute precursor molecules for the polymer, and optionally a solvent, can be converted into a polymer film by conversion of the precursor molecules into the polymer, optionally combined with evaporation of the solvent.

Application of the polymer in the form of a polymer film may for example be combined with the embodiment of the process wherein the virgin contact-free glass film has the form of a tube and the polymer film is applied by winding the film around that tube.

Where the glass film is a flat film the polymer film may be drawn down from a suitable source simultaneously with the draw-down of the glass and laminated onto the glass film.

The polymer film may also be formed by applying a polymer melt by die -extrusion coating of the melt on the glass film and cooling the melt.

Alternatively, the polymer film may also be formed by applying a polymer solution comprising the polymer in a suitable solvent followed by evaporation of the solvent.

In another preferred embodiment of the process according to the invention, the application of a polymer film is combined with application of an adhesive. This has the advantage that the adhesion of the composite layered material between the glass film and the polymer film can be improved.

The adhesive may be first applied on the glass followed by application of the polymer layer, or the adhesive may be applied on or combined with the polymer before application of the polymer on the glass film. Where the adhesive is first applied on the glass film or on the polymer, it is typically applied on that side of the glass film or polymer film by which the glass film and polymer film become adhered to each other. The resulting interlaid adhesive layer is considered herein to form part of the polymer layer in the composite layered material. The adhesive can, for example, be a layer of liquid silane or a primary coating layer comprising an adhesion promoter.

A further and preferred embodiment consists of applying the polymer in the form of a coating composition followed by curing the coating composition to produce the polymer film. A coating composition is herein understood a composition that comprises low molecular components which constitute precursor molecules for the polymer and which can be converted into the polymer by chemical reaction between the precursor molecules, which chemical reaction is called curing. An advantage of the process wherein the polymer is applied in the form of a coating composition is that such a composition has a lower viscosity with the need of less solvent or no solvent at all, and/or with the need of less heating or no heating compared to polymer melts or polymer solutions and that such a composition can be simpler applied, for example by spraying. In a further preferred embodiment, the polymer film is applied as a coating composition by spraying. This has the advantage that much thinner polymer films can be applied while retaining a good coverage and evenness of the film.

In the process according to the invention, wherein the polymer film is applied as a coating composition by spraying, the coating composition preferably has a viscosity, at the temperature at which it is applied, of at most 1000 cPoise. Preferably, the viscosity is at most 500 cPoise, more preferably at most 200 cPoise, and even more preferably at most 100 cPoise

In the embodiment wherein the polymer film is applied as a coating composition, the coating composition preferably is a radiation curable coating composition or a peroxide-curable composition and the polymer film is formed by radiation curing, or respectively by heating.

Radiation curing may be accomplished, for example, by EB curing or by UV curing. EB curing has the advantage that the curing is accomplished more homogeneously, in particular when thicker coating layers are applied.

More preferably the coating composition comprises an adhesion promoter, preferably a silane coupling agent. Even more preferably, the coating composition is a UV-curable coating composition comprising acrylate functional oligomers, a diluent, a silane coupling agent and a photo-initiator. Even more preferably, the coating composition further comprises acrylic acid. The advantage of silane and acrylic acid is that the adhesion of the resulting polymer layer to the glass layer is enhanced.

For examples of suitable radiation curable coating compositions specific reference is made to the complete contents of US 6528553 and US 6528553. For examples of suitable hard coating compositions specific reference is made to the complete contents of US6080483. Further suitable cationic radiation curable coating compositions are mentioned in patent application WO-02/00528.

A glass-strengthening additive can be added to the coating composition to prevent the deterioration of the glass film. These additives include tetraalkoxy silanes, tetraalkoxy titanates, tetraalkoxy zirconates, polytetraalkoxy silanes, polytetraalkoxy titanates, polytetraalkoxy zirconates. Typically, the tetraalkoxy compound or polytetra alkoxy compound is present in the coating composition in an amount sufficient to delay deterioration of the glass film upon which the composition containing the tetraalkoxy compound or polytetraalkoxy compound is coated. Preferably, the tetrasubstituted compound is present in the coating composition in the range of about 0.1% to about 50% by weight of the entire composition. More preferably, this amount is 0.1% to 30%.

In addition, photoacid generators such as aryl sulfonium salts, aryl iodonium salts can be used as glass-strenthening additive.

The glass-strengthening additives also include strong acid functional ethylenically unsaturated monomers which are monomer comprising ethylenic unsaturation and a strong acid group. This type of additives is usually used for secondary coating composition or hard coating composition. An example of a strong acid functional ethylenically unsaturated monomer is phosphoric acid monoacrylate, commercially available as Ebecryl 170 through UCB Chemicals Corporation. Another example is 2-acrylamido-2-methylpropanesulfonic acid, commercially available as Lubrizol™2401 through the Lubrizol Corporation. The strong acid functional ethylenically unsaturated monomer is preferably present in the range of about 0.1% to about 10%, more preferably in the range of about 0.1% to about 5% by weight of the entire coating composition.

Examples of these glass-strengthening additives and their use in coating compositions are discussed in US Pat. 5,564,041 and US Pat. 6,306,924, which are both hereby incorporated by reference.

The polymer that can be used in the process according to the invention, either as such or in the form of or precursor molecules thereof, can be any polymer that is capable to form a film. Preferably, the polymer is a polyacrylate or a copolymer of acrylate monomers and/or acrylate oligomers and copolymerizable monomers and/or acrylate oligomers. The advantage of the process according to the invention wherein the polymer is a polyacrylate or a copolymer as mentioned is that the composite layered material prepared therewith has a better transparency and results in better legibility when applied for instance in a electronic optical device.

Alternatively, the polymer consists of polycarbonate or PET. For these polymers the same advantages for the transparency apply.

The inorganic glass material that can be used in the process according to the invention can be any glass that is suitable to be shaped from the melt to form a monolithic glass film. Preferably, the glass has sufficient transparency for use in optical display systems. Suitable inorganic glass materials include aluminum oxides and silicon oxides. Preferably the inorganic glass material is selected from the group consisting of silicon oxide based glasses. Suitable silicone oxides are, for example, borosilicate glasses.

Further preferred embodiments of the inventive process include those embodiments which result in the preferred embodiments of the composite layered material according to the invention as described below.

As indicated above, the present invention also relates to a composite layered material suitable for use as barrier layer in optical display systems and comprising a monolithic glass film and a polymer film adhered to at least one side of the glass film.

The inventive product, which can be obtained with the process according to the invention mentioned above, is characterized in that the composite layered material comprises a monolithic glass film having a thickness of less than 20 µm.

As said before, the inventive material combines good barrier properties, with a increased flexibility. Surprisingly, these materials have such mechanical properties, which allow these materials to be cut with pairs of scissors or simply be punched, without any breakage or only to a very limited extend. More surprisingly, these properties are already achieved with a composite layered material according to the invention comprising a polymer film at only one side of the glass film. Because of these "punching" properties the composite layered products obtainable with the inventive process can advantageously be used in further application processes wherein the foils can be cut by punching into complicated shapes.

In the context of the present invention a monolithic glass film is understood to be an integral glass film made by or obtainable by a melt drawing process.

Neither EP1137607, nor GB-1319846, nor Burrows et al, cited above, mentions a process wherein a polymer is applied on at least one side of a virgin contact-free glass film, nor a composite layered material according to the present invention which comprises a monolithic glass film with a thickness of less than 20 µm and combines the barrier properties with the inherent flexibility thereof, let alone the further advantageous cutting and punching properties thereof.

Composite layered material that are suitable for use as barrier layer in optical display systems must have good barrier properties.

The good oxygen barrier properties can be illustrated with results form the so-called "Mocon permeability test", and the so-called "calcium test" for evaluating high performance diffusion barriers. Both methods are identified and detailed below.

A standard test to measure oxygen barrier performance is the Mocon permeability test according to ASTM D3985. In this test the oxygen permeability is measured by exposing a film in a MOCON OX-TRAN 2/21 permeameter to a nitrogen environment at one side and an oxygen atmosphere at the other side of the film leading to an oxygen partial pressure difference over the films of 1 bar. The permeability test is standard conducted under dry conditions and unless otherwise stated at room temperature (23°C).

The composite layered material, due to the monolithic glass layer in it, has such good inherent barrier properties that the oxygen permeability in the MOCON test, is far below 5.10⁻³ cm³/m²/bar/day at 23°C, which is the detection limit of this test method.

For being suitable as barrier layer in optical display systems the composite layered material must also have a very good barrier properties against water. The composite layered material according to the invention easily complies with the requirements of a water permeability of at most 5 mg/m²/day at 0%/85% RH and 23°. These are the limits of the Mocon test according to Burrows.

In a preferred embodiment the composite layered material according to of the invention has an oxygen permeability of at most 5.10⁻⁴ cm³/m²/bar/day at ambient conditions

In another preferred embodiment the composite layered material according to of the invention has a water permeability of at most 0.5 mgl/m²/day at at 0%/85% RH and 23°, and more preferably at most 0.1 mg/m²/day at 0%/85% RH and 23°.

The advantage of the inventive material having a lower oxygen and/or water permeability is that the lifetime of electronic optical devices in which the material is used, is further enhanced.

For barrier systems that have to comply with the latest requirements of OLED systems, the oxygen and water barrier performance must be so good that the performance can not be measured and discriminated anymore by the Mocon permeability test. For that purpose an alternative experimental technique has been developed, which is described in a joint paper by co-workers of Vitex, Philips, Pacific Northwest Nat. Labs and Next Gen Technologies in Asia Display /IDW2001, page 1435. This method, which is aimed for the evaluation of high performance diffusion barriers, involves a thin calcium film deposited on the substrate of choice and encapsulated with a transparent adhesive /sealant and a glass lid, and is based on the corrosion of the calcium film upon both oxygen and water permeation. This method is further herein denoted as the "calcium test". This test is very sensitive to very small defects or leakages resulting in spots in the calcium layer. Such defects are unacceptable because it could lead to local contrast differences in optical displays wherein the composite layered material would be used.

With the composite layered material according to the invention very good results can be obtained in the calcium test. These good results can be demonstrated with very limited spot formation if any spot formation at all.

The composite layered material according to the invention may be flat or may have a bent structure. The composite layered material with the bent structure may for example have the shape of a winded role of said material. The composite layered material according to the invention is therefore considered as a flattenable composite layered material. In the context of the present invention a flattenable material is understood to be a material, which is, either already flat itself or which has a linear structure in one direction and a bent structure in another direction, and which can be flattened, for example, by pressing, bending, clamping and/or stretching the bent structure to a linear structure. A typical characteristic of such a material having a bent structure in the other direction is that the bent structure can be flattened and that then the first linear structure in the one direction can be bent.

Preferably, the glass film in the material according the invention has a thickness of 1-15, more preferably the glass film has a thickness of at most 12 µm, even more preferably at most 10 µm and most preferably at most 5 µm. The advantage of a composite layered material wherein the glass film has a lower thickness is that the flexibility and punchability is better.

Also preferably the polymer film in the composite layered material according the invention has a thickness of 1-200 µm, more preferably the polymer film has a thickness of at most 100 µm, even more preferably at most 50 µm and most preferably at most 20 µm. The advantage of a composite layered material wherein the polymer film has a lower thickness is that the flexibility is better.

In another preferred embodiment, the material according to the invention comprises two polymer films, the first polymer film adhered to one side of the glass film, and the second polymer film adhered to the other side of the glass film.

In a further preferred embodiment, the polymer film, or polymer films, in the material according to the invention, consist of more than one layer and wherein the polymer film, or polymer films comprises a primary coating or primary layer (i.e. at the inner side adjacent to the glass film) and a hard layer as a secondary coating or layer (i.e at the outer side of the composite material).

Preferably, the primary layer is a soft layer and the secondary layer is a hard layer. The characteristic difference between a soft layer and a hard layer in this embodiment is that a hard layer has a E-modulus which is higher than the E-modulus than soft layer.

More preferably, the primary layer has an E-modulus of less than 200 MPa, and the secondary layer has an E-modulus of at least 100 MPa. More preferably, the primary layer has an E-modulus of 0,1-100 MPa, and the secondary layer has an E-modulus of 200-5000 MPa.

On another preferred embodiment, the primary layer is a layer consisting of an adhesive material. This has the advantage that the adhesion between the glass film and the polymer film is improved, but even more important that the barrier properties are better retained after several times of bending of the composite layered material and that the composite layered material can be even better punched.

In the material according to the invention the polymer film adhered to the glass, as well as the primary layer and/or the secondary layer therein, may have any composition that is suitable for the purpose of the invention. The polymer film, or the soft layer and/or the hard layer therein, may, for example, consist of a thermoplastic polymer or of a cured coating material.

Suitable thermoplastic polymers include, for example, polyolefines, polyesters, polyethers, and polyamides. Preferably, the thermoplastic polymer comprises polar groups, and or adhesion promoting groups like siloxanes.

Suitable cured coating materials include radiation-cured coatings, such as UV-cured and EB-cured coatings, and thermo cured coatings such as peroxide-cured coatings.

Preferably, the polymer film, or the primary layer and/or the secondary layer therein, consist of a radiation -cured or peroxide-cured coating.

More preferably, the polymer layer, or in case of multiple layers at least the primary layer, consists of a radiation -cured or peroxide-cured coating obtainable from a radiation curable or peroxide-curable coating composition comprising monomers comprising acidic functional groups and/or silane functional groups. Preferably, the composition comprises silane functional groups, more preferably silane and carboxylic acid functional groups.

The advantage of the composite layered material wherein the polymer film, or in case of multiple layers at least the primary layer consists of a UV-cured or peroxide-cured coating obtainable from a UV-curable or peroxide-curable coating composition comprising monomers comprising acidic functional groups and/or silane functional groups is that that the punching properties are better and the barrier properties of the composite layered material in an electronic optical device are improved.

Preferably, the adhesion between the polymer film and the glass film in the composite layered material according to the invention, expressed in terms of adhesion force determined in a peel test with a peel angle of 90° and a pulling speed of 10 mm/min, is at least 1N. More preferably, the adhesion tested in peel test with a peel angle of 90° and a pulling speed of 10 mm/min is at least 1.25 N, more preferably at least 1.5 N, still more preferably at least 2 N, and most preferably at least 4 N. Alternatively, the adhesion between the polymer film and the glass film in the composite layered material according to the invention may be expressed in terms of adhesion work determined in a peel test with a peel angle of 90° and a pulling speed of 10 mm/min. Preferably, the adhesion work so determined is at least 50 J/m², more preferably at least 62.5 J/m² and still more preferably at least 75 J/m² and most preferably at least 100 J/m². The advantage of a higher adhesion is that the punching properties are improved and sharper punching edges are obtained.

The hard layer, in the polymer film with multiple layers preferably consists of a UV-cured or peroxide-cured coating obtainable from a radiation curable or peroxide-curable coating composition.

Most preferably, the polymer film, or in case of multiple layers at least the primary layer, consists of a UV-cured or peroxide-cured coating obtainable from a UV-curable or peroxide-curable coating composition based on acrylic monomers and oligimers. The advantage thereof is that the composite layered material has a better transparency.

Preferably, the composite layered material according to the invention has a transparency of at least 85%, more preferably at least 90% and most preferably at least 92%. Transparency is an important property for optical display systems.

For examples of suitable radiation curable coating compositions specific reference is made to the complete contents of US 6528553 and US 6528553. For examples of suitable hard coating compositions specific reference is made to the complete contents of US6080483. Further suitable cationic radiation curable coating compositions are mentioned in patent application WO-02/00528.

The monolithic glass layer in the composite layered material according to the invention may be any glass that is suitable for use in optical display systems. A basic requirement is that the glass has sufficient transparency for use in such systems. Suitable inorganic glass materials include aluminum oxides and silicon oxides.

Preferably the inorganic glass material is selected from the group consisting of silicon oxide based glasses. Suitable silicone oxides are, for example, borosilicate glasses.

The composite layered material according to the invention may advantageously comprise an additional coating layer, such as an anti-smudge, anti-glare or anti-reflective coating layer, applied on top of the composite layered material at the side of the composite layered material that is intended to be exterior or exposure side in optical device systems. Such additional coating layer may be applied after the composite layered material has been prepared with, for example, the process according to the invention described herein.

The composite layered material according to the invention can advantageously be used in a shaping process for preparing shaped barrier layers, and is advantageously applied as a barrier layer in electronic optical devices, such a s LCDs and OLEDs.

The composite layered material according to the invention may also be used as packaging material, for example for the packaging of medicines and food.

The invention also relates to the use of the composite layered material according to the invention, and the preferred embodiments thereof as a barrier layer in electronic optical devices.

The invention also relates to a process for a preparing electronic optical device, comprising an optical display covered with a piece of barrier layer. In the process according to the invention the piece of barrier layer is cut or punched from a sheet of composite layered material according to the invention, thereby forming cut or punched edges and wherein the edges are sealed.

With this process electronic optical devices can be produced which have improved flexibility combined with a long service life of the optical display.

The invention also relates to a process for preparing an electronic optical device comprising assembling an optical device and a barrier layer according to the invention wherein the assembling comprises folding a piece of barrier layer cut or punched from a sheet of composite layered material according to the invention. This process has become possible due to the advantage flexibility properties of the inventive composite layered material, and which can be flattened or folded or wrapped like a blanked. The advantage of the process is that sealing of edges of the barrier layer, formed by the cutting or punching, can be better sealed.

The folding of the piece of barrier layer may, for example, comprise covering of the front side of the optical device and folding around the edges of that device, or folding the piece to form a complete envelop of the optical device. The envelope favorably comprises overlapping sections of the piece near all edges.

To improve the barrier properties of the barrier layer in the electronic optical device, the edges of the piece of barrier layer are sealed.

The sealing may be carried out, for example, by clamping and/or by applying a sealing agent around the edges, or a combination of both. Clamping may for example be imparted by a casing, which comprises the optical device, or by a metal rim around the optical display. Sealing may be carried out, for example, by applying a metal layer by evaporation, or by applying a sealing agent.

Preferably, the sealing is carried out with a polymer composition comprising an oxygen scavenger.

Suitable polymer compositions that can be used as sealing agent in the process according to the invention are mentioned in patent application WO-02/00528 which is incorporated herein by reference.

Before the edges are sealed with the sealing agent a small strip of the polymer film may be stripped around the edges of the piece of barrier material, thereby improving the service life of the electronic device.

The optical display that can be used in the process according to the invention to produce the electronic optical device may be, for example, an LCD or an OLED, preferably an OLED.

The invention also relates to an electronic optical device comprising an optical display and a barrier layer consisting of a composite layered material according the invention, and to an electronic optical device obtainable by the process according to the invention. The advantageous flexibility and barrier properties of the composite layered material according to the invention impart high both flexibility and a long service life to the inventive electronic optical device. The service life of the electronic optical device is further enhanced when the edges of the piece of barrier material have been sealed with a polymer composition comprising an oxygen scavenger.

The invention is further illustrated with the following examples and comparative experiments.

### Materials

### Glass cylinder

A borosilicate type 3.3 glass cylinder with the following dimensions was used: thickness 2.5 mm, length 370 mm, and diameter 100 mm.

### Coating compositions

A Basic Composition (BC) with the following composition was used: 37.8 wt.% of a diacrylate derived from polytetramethyleneglycol 650, toluene disocyanate and 2-hydroxyethylacrylate; 29 wt.% of bisphenol-A-diglycidylether diacrylate; 9 wt.% hexamethylene diacrylate; 10 wt.% 2-phenoxyethyl acrylate, 10 wt.% isobornyl diacrylate, 0.7 wt.% 2-hydroxyethylacrylate; and 0.04 wt.% dibutyltin dilaureate; 0.04 wt.% 3,5-ditertiarybutyl-4-hydroxytoluene (A-1); 0.5 wt.% thiodiethylene bis-(3,5-di-tert-butyl-4-hydroxy)hydrocinnamate) (A-2); 2.0 wt.% 2,4,6-Trimethylbenzoyl diphenyl phosphine oxide (A-3) ; and 1 wt.% (1-Hydroxy-cyclohexyl)-phenyl-methanone (A-4), wherein A-1 and A-2 are stabilizers and A-3 and A-4 are UV-initiators.
Composition I: 50 wt.% BC; 50 wt.% MEK
Composition II: 47.5 wt% BC; 2.5 wt% acryloxy propyl trimemethoxy silane (APTMS); 50 wt% MEK
Composition III: 45 wt% BC; 2.5 wt% acryloxy propyl trimemethoxy silane (APTMS); 2.5w% acrylic acid (AA); 50 wt% MEK

### Production of thin glass

The glass cylinder was positioned in a lathe and fixed on both edges. The glass was locally heated with a glass flame on a central spot of the glass while the cylinder was rotating with a typical rotation speed of 38 rpm. The part of the glass cylinder that was heated by the gas flame has a width in the range of 4-8 mm. Furthermore, the glass cylinder was heated internally with an electrical heating system over a length of 15 cm close to the spot of the gas flame. The temperature of the electrical heating elements was in the range of 800-950 C. The local temperature of the heated glass was determined by an IR temperature detection system. At the moment a local glass temperature of 1300°C was reached, the glass cylinder was stretched by an axial displacement. The speed of this displacement was in the range of 150-250 mm/s. To prevent necking of the glass during the stretching process, the glass cylinder was pressurized during stretching. For doing so, the sides of the glass cylinder are blocked to obtain a closed system. A pressure-time profile of this closed system was applied which was regulated by a gas flow control system hooked up to a pressurized air device with a maximum pressure of 3.5 bars and a maximum gas flow rate of 3.33 l/s. The gas flow-time profile was be regulated in such a manner that upon stretching the glass cylinder the diameter of the stretched part of the glass remained constant over the length of the stretched glass part. In other experiments it was chosen in such a manner that the diameter of the molten glass was increased with respect to the original diameter and remains constant over the length of the stretched glass part.

### Comparative Experiment A

In a first experiment, according to the previous described process, the glass cylinder was stretched under the following conditions:
- the glass cylinder was rotated at 38 rpm and the electrical heating was started; the temperature of internal electrical heating devices was 850 °C.
- then the local gas heating was started
- then the following procedures in time was applied:
   ∘ t=0s, shot off gas burner at the moment the local temperature heated glass was 1200°C
   ∘ t=0.2s, start axial stretching process
   ∘ t=0.5s, start gas flow at 0.82 l/s
   ∘ t=2.1s, stop axial stretching process, gas flow at low capacity of 0.03 l/s and allow glass to cool under rotating conditions
   ∘ stop rotation cylinder

A piece of glass was cut from the thin part of the stretched cylinder. It appeared that this part of the glass was mechanically very fragile. It was not possible to handle a large thin glass piece because it breaks very easily in many small pieces. The thickness of the small glass pieces was measured to be 18 µm.

### Comparative Experiment B

In a second experiment, the procedure of Comparative Experiment A was repeated with the following modified procedure in time:
∘ t=0s, shot off gas burner at the moment the local temperature heated glass was 1300°C
∘ t=0.2s, start axial stretching process
∘ t=0.5s, start gas flow at 0.35 l/s
∘ t=0.8s, gas flow equals 0.93 l/s
∘ t=2.1s, stop axial stretching process, gas flow at low capacity of 0.08 l/s and allow glass to cool under rotating conditions
∘ stop rotation of cylinder

A piece of glass was cut from the thin part of the stretched cylinder. It appeared that this part of the glass was even more mechanically fragile compared to example I. The thickness of the small glass pieces was measured to be 9 µm.

### Comparative Experiment C

In this experiment a dual stretching process was used to obtain a glass film with an even lower thickness. It is emphasized that the fact that a dual stretching procedure was used relates to practical limitations of the stretching device as such. It was not related to fundamental limitations. The practical limitations are of the following nature:
- maximum stretching length of lathe was 490 mm
- maximum stretching speed of 250 mm/s
- the part of the glass cylinder that was heated by the gas flame has a minimum width of 4 mm.

The first stretching step implies stretching of the heated glass zone at 1200°C by only 10 mm. In a second step, the procedure as described in examples 1 and 2 was repeated. The piece of glass stretched in the first stretching step was again heated in the second stretching step with the following procedure in time:
∘ t=0s, shot off gas burner at the moment the local temperature heated glass was 1300 C
∘ t=0.2s, start axial stretching process
∘ t=0.5s, start gas flow at 1.00 l/s
∘ t=0.8s, gas flow equals 1.83 l/s
∘ t=2.0s, stop axial stretching process, gas flow at low capacity of 0.13 l/s and allow glass to cool under rotating conditions
∘ stop rotation of cylinder

A piece of glass was cut from the thin part of the stretched cylinder. It appeared that this part of the glass was even more mechanically fragile compared to Comparative Experiment A. The thickness of the small glass pieces was measured to be 5 µm.

### Coating of the glass

### Example I

A glass cylinder was stretched under exactly the same conditions as described in Comparative Experiment A. At the end of the stretching process the glass was not cut from the cylinder but the cylinder was kept in the lathe. The thin cylindrical part of the glass was spray coated from the outside with an UV-curable acrylate coating formulation of composition I. This spray-coating process was performed in a nitrogen rich environment (hood was build around cylinder) at room temperature. The composition of the coating recipe is given above. The solvent MEK was applied to improve the spray coating process. Upon addition of MEK the viscosity of the coating dropped leading to a much smoother coating surface after spray coating. During spray coating the cylinder was rotated at low rotation speed (6 rpm). The width of the coated glass cylinder was approximately 150 mm. MEK was allowed to evaporate during and after the spray coating process. The coating was UV-cured under nitrogen rich conditions on the cylinder with a UV-lamp. The total radiation energy was 1 J/cm².

The coated part of the cylinder was cut with scissors and was bended in a flat plane. It appeared however that upon cutting with scissors, the coating delaminated from the glass and the glass cracked.

### Example II

Example I was repeated but the coating composition was changed into composition II, Composition II differs from composition I in that an adhesion promoter was added. Again the coated part of the cylinder was cut with scissors and was bent in a flat plane. It appeared however that upon cutting with scissors, the coating did not delaminate as in the previous example. Some limited local delamination and some crumbling of the glass at the cut edges occurred.

### Example III

Example II was repeated but the coating composition was changed into Composition III. Again the coated part of the cylinder was cut with scissors and was bended in a flat plane. It appeared however that upon cutting with scissors, the coating did not delaminate at all. Surprisingly the system can be cut just as cutting a polymer film. A simple peel test by hand proved indeed that the adhesion improved significantly compared with Example II. The thickness of the coating layer appeared to be 51µm, the thickness of the glass 18 µm. The dimensions of this flat system were approximately 100 * 150 mm². This flat system was again coated from the other side with identical coating formulation and UV-cured under identical conditions (1 J/cm²). The thickness of this layer was 50 µm. This sandwich system was tractable. The appearance is like a polymer film.

### Example IV

In this example a glass cylinder was applied according to Comparative Experiment B. This glass cylinder was coated and further treated to obtain a sandwich system as described in Example III. So, the only difference between Example III and IV is the thickness of the glass. In example IV the thickness of the glass is 9 µm.

### Example V

In this example a glass cylinder was applied according to Comparative Experiment C. This glass cylinder was coated and further treated to obtain a sandwich system as described in Example III. So, the only difference again is the thickness of the glass layer. In example V the thickness of the glass is 5 µm.

### Properties

Various properties of the sandwich films, as described in Examples III, IV and V, have been measured.

### Mechanical flexibility

The mechanical flexibility of these samples was measured by bending the samples and measuring the bending diameter at which mechanical failure occurs. It appeared that for all samples breaking of the glass layer occurred. Failure of the coating did not take place in these tests. In the following table, the bending diameter at break is indicated for the three sample studied.

**Table 1: Bending test results for samples VI-VIII**

| Example | Bending diameter at break in mm |
|---|---|
| III | 4 |
| IV | 2 |
| V | 1.5 |

So, reducing the thickness of the glass layer leads to a lower bending diameter at break.

### Oxygen barrier

The oxygen permeability of the films was measured by a MOCON OX-TRAN 2/21 permeameter according to ASTM D3985. The films were exposed to a nitrogen environment on one side and an oxygen atmosphere on the other side leading to an oxygen partial pressure difference over the film of 1 bar. All permeability tests were conducted under dry conditions at room temperature (23°C) (see next table for results).

A standard polyamide 6 (PA6) film with a film thickness of 80 µm was included as a reference sample.

**Table 2. Oxygen barrier properties of Examples VI-VIII and Comparative Experiment A**

| System of example | Oxygen permeability cc/(m²∗day) |
|---|---|
| III | 0 * |
| IV | 0 * |
| V | 0 * |
| Comparative Experiment D (PA6-film) | 12.8 |

| | |
|---|---|
| * Below the detection limit of the Mocon test. | |

The PA6 reference film gives a value of 12.8 cc/(m²∗day) as expected. All sandwich systems (Examples III, IV and V) give a zero value, i.e. they are of a hermetic nature. It should be remarked that the resolution of the MOCON permeameter is 5*10⁻³ cc/(m²∗day). So, the permeability values are lower than this value.

### Puncture resistance

The test was performed with regular office punch with which circular holes perforations with a diameter of about 6 mm were punched. The punched holes were inspected on breakage, tearing and crumbled glass. The sheets of Examples III-V showed no breakage of the glass or the tearing of the film, and nearly-to-no crumbling of the glass. The best results were obtained Example VIII. By contrast Example I showed severe crumbling while Example II showed less but still significant crumbling of the glass.

### Adhesion test

Adhesion tests were performed with the following UV-curable coating compositions:
Composition I: 50 wt% BC; 50 wt% MEK
Composition IV) 40 wt.% BC, 5 % Acryloxy propyl trimethoxy silane (APTM), 5 % Carboxy ethyl acrylate, 50 % Methyl ethyl keton (MEK)
Composition V) 44 wt.% BC, 5 wt.% APTMS, 1 wt.% Cationic Photoinitiator UVI 6974, 50 % MEK.
Composition VI) 40 wt.% BC, 5 wt.% APTMS, 5 wt.% Acrylic Acid, 50 wt.%MEK.

The adhesion test was performed by first preparing a film of coated UV-cured samples on a flat glass plate. For the UV curing a UV exposure of 1J/cm² was applied. In some of the experiments the glass was first treated with a silane. The adhesion was tested directly after the UV-curing, as well as after post-curing at 100 °C for 1 hour, and after storage for 4 days at room temperature.

A strip of 20mm width and approximately 250mm length of coating was cut with a sharp scalpel. Over a length of approximately 50mm, the coating is peeled of manually from the glass by using a sharp razorblade. The end of this strip was reinforced by the use of sticky tape, to prevent slippage and cracking of the UV-cured coating in the clamps. The glass plate was attached to a metal skid by use of double-sided sticky tape. This metal skid was used to ensure a peel angle of 90°C. It consisted of a metal table, attached by a bearing to ensure low force sliding of this table, and an attachment to a Zwick tensile tester.

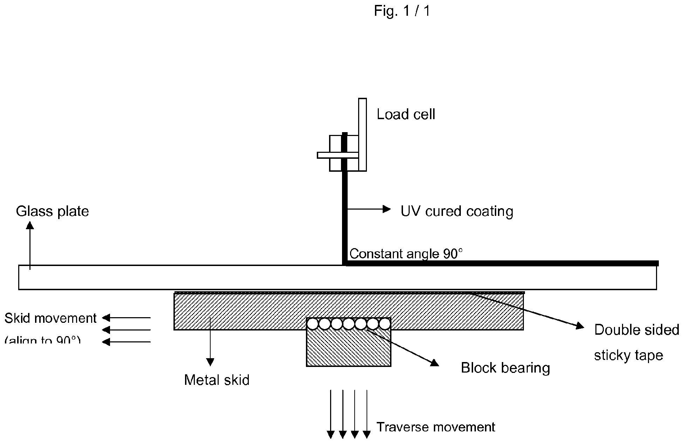

The peel test itself was performed on a Zwick tensile tester, using the traverse of the tensile machine as displacement-device, and a 20N Zwick force transducer- load cell. The metal skid / glass plate was put into the tensile tester and the manually peeled coating strip is attached to the load cell. During the whole test, the angle between the peeled strip and the glass plate was kept constant at 90°, by shifting the glass plate/metal skid. The traverse speed was set at 10mm/min. Thus the peel speed was controlled at 100 mm/min. A schematic drawing of the test set-up is given in Figure 1.

The peel force is determined by the average peel force over the test path. The test results are given in Table 3.

**Table 3: Adhesion test results with coating formulations 1-6**

| **Coating Composition** | | Adhesion Force **[N]** | | | Adhesion work **[J/m²]** | | |
|---|---|---|---|---|---|---|---|
| | **Treatment** | F-M1 | F-M2 | **F _{average}** | W-M1 | W-M2 | **W_{avergae}** |
| | | | | | | | |
| **C-I** | After UV cure | 0,69 | 0,53 | 0,61 | 35,87 | 27,83 | 31,9 |
| | UV cure --> 1h 100°C | 5,39 | 5,28 | 5,34 | 263,75 | 259,33 | 261,5 |
| | UV cure --> after 4 days | 0,02 | 0,04 | 0,03 | 0,54 | 1,97 | 1,3 |
| | Silane treated glass | -- | -- | -- | -- | -- | -- |
| **C-IV** | After UV cure | 1,03 | 1,31 | 1,17 | 51,71 | 64,65 | 58,2 |
| | UV cure --> 1h 100°C | 2,30 | 1,89 | 2,09 | 114,30 | 93,14 | 103,7 |
| | UV cure --> after 4 days | 5,73 | | 5,73 | 285,72 | | 285,7 |
| | Silane treated glass | 1,47 | 2,14 | 1,81 | 127,00 | 286,00 | 206,5 |
| **C-V** | After UV cure | 1,00 | 1,01 | 1,01 | 49,77 | 50,30 | 50,0 |
| | UV cure --> 1h 100°C | 2,24 | 2,29 | 2,27 | 111,37 | 113,28 | 112,3 |
| | UV cure --> after 4 days | 1,06 | | 1,06 | 62,40 | | 62,4 |
| | Silane treated glass | >enhanced tear strength | | | | | |
| **C-VI** | After UV cure | 1,85 | 1,90 | 1,88 | 92,43 | 95,08 | 93,8 |
| | UV cure --> 1h 100°C | 5,80 | 5,13 | 5,47 | 287,62 | 254,01 | 270,8 |
| | UV cure --> after 4 days | 6,78 | | 6,78 | 336,51 | | 336,5 |
| | Silane treated glass | 1,37 | | 1,37 | | | |

## Claims

1. Process for preparing a composite layered structure comprising a glass film and a polymer film adhered to the glass film, comprising
- melting and drawing an inorganic glass material to form a virgin contact-free solid glass film, and
- applying a polymer film in the form of a polymer solution or a coating composition on at least one side of the glass film,
wherein the polymer film is applied before any side of the glass film is touched mechanically or supported mechanically other than by the inorganic glass material, or in contact with any other material, with the exception of a liquid floating bath, which liquid floating bath might be in contact with the glass film at the side opposite to the side to which the polymer film is applied, and the glass film has a thickness of less than 20 µm.

2. Process according to claim 1, wherein the glass film has a thickness of 1 - 15 µm.

3. Process according to claim 1 or 2, wherein the glass film has a flat shape.

4. Process according to claim 1 or 2, wherein the glass film has a cylindrical shape.

5. Process according to claim 4, wherein a pressure is applied inside the cylindrical shape.

6. Process according to claim 4 or 5, wherein the polymer film is applied at the outside of the cylindrical glass film.

7. Process according to any of claims 1-6, wherein the process is carried out as a continuous process.

8. Process according to any one of claims 1-7, wherein application of the polymer film is combined with application of an adhesive layer.

9. Process according to any one of claims 1-8, wherein the polymer film is applied by applying a coating composition followed by curing of the coating composition.

10. Process according to claim 9, wherein the coating composition has a viscosity, at the temperature at which it is applied, of at most 1000 cPoise.

11. Process according to claim 9 or 10, wherein the coating composition is a radiation curable coating composition or a peroxide-curable composition and the polymer film is formed by radiation curing respectively by heating.

12. Process according to any one of claims 9-11, wherein the coating composition comprises an adhesion promoter.

13. Process according to any one of claims 9-12, wherein the coating composition further comprises a glass-strengthening additive.

14. Process according to any one of claims 9-13, wherein the coating composition is a UV-curable coating composition comprising acrylate functional oligomers, a diluent, a silane coupling agent and a photo-initiator.

## Patentansprüche

1. Verfahren zur Herstellung einer Verbundstoff-Schichtstruktur, die einen Glasfilm und einen an dem Glasfilm haftenden Polymerfilm umfasst, umfassend
- Schmelzen und Ziehen eines anorganischen Glasmaterials, um einen unberührten, kontaktfreien, festen Glasfilm zu erzeugen, und
- Aufbringen eines Polymerfilms in der Form einer Polymerlösung oder einer Beschichtungszusammensetzung auf wenigstens eine Seite des Glasfilms,
wobei der Polymerfilm aufgebracht wird, bevor eine Seite des Glasfilms mechanisch berührt oder anders als von dem anorganischen Glasmaterial mechanisch getragen wurde oder mit einem anderen Material in Kontakt war, mit der Ausnahme eines flüssigen Floatbads, welches flüssige Floatbad an der Seite, die der Seite gegenüberliegt, auf die der Polymerfilm aufgebracht wird, mit dem Glasfilm in Kontakt stehen kann, und der Glasfilm eine Dicke von weniger als 20 µm aufweist.

2. Verfahren gemäß Anspruch 1, wobei der Glasfilm eine Dicke von 1-15 µm aufweist.

3. Verfahren gemäß Anspruch 1 oder 2, wobei der Glasfilm eine flache Form aufweist.

4. Verfahren gemäß Anspruch 1 oder 2, wobei der Glasfilm eine zylindrische Form aufweist.

5. Verfahren gemäß Anspruch 4, wobei ein Druck innerhalb der zylindrischen Form angelegt wird.

6. Verfahren gemäß Anspruch 4 oder 5, wobei der Polymerfilm an der Außenseite des zylindrischen Glasfilms aufgebracht wird.

7. Verfahren gemäß einem der Ansprüche 1-6, wobei das Verfahren als kontinuierliches Verfahren durchgeführt wird.

8. Verfahren gemäß einem der Ansprüche 1-7, wobei das Aufbringen des Polymerfilms mit dem Aufbringen einer Klebstoffschicht kombiniert wird.

9. Verfahren gemäß einem der Ansprüche 1-8, wobei der Polymerfilm durch Aufbringen einer Beschichtungszusammensetzung, gefolgt von Härten der Beschichtungszusammensetzung, aufgebracht wird.

10. Verfahren gemäß Anspruch 9, wobei die Beschichtungszusammensetzung eine Viskosität bei der Temperatur, bei der sie aufgebracht wird, von höchstens 1000 cPoise aufweist.

11. Verfahren gemäß Anspruch 9 oder 10, wobei die Beschichtungszusammensetzung eine strahlenhärtbare Beschichtungszusammensetzung oder eine peroxidhärtbare Zusammensetzung ist und der Polymerfilm durch Strahlungshärtung bzw. durch Erhitzen gebildet wird.

12. Verfahren gemäß einem der Ansprüche 9-11, wobei die Beschichtungszusammensetzung einen Haftförderer umfasst.

13. Verfahren gemäß einem der Ansprüche 9-12, wobei die Beschichtungszusammensetzung ferner einen glasverstärkenden Zusatzstoff umfasst

14. Verfahren gemäß einem der Ansprüche 9-13, wobei die Beschichtungszusammensetzung eine UV-härtbare Beschichtungszusammensetzung ist, die acrylatfunktionelle Oligomere, ein Verdünnungsmittel, ein Silan-Kopplungsmittel und einen Photoinitiator umfasst.

## Revendications

1. Procédé pour la préparation d'une structure composite en couches comprenant un feuil de verre et un film de polymère collé au feuil de verre, comprenant
- la fusion et l'étirage d'un matériau en verre inorganique pour former un feuil de verre solide sans contact vierge et
- l'application d'un film de polymère sous la forme d'une solution de polymère ou d'une composition de revêtement sur au moins un côté du feuil de verre,
dans lequel le film de polymère est appliqué avant qu'un quelconque côté du feuil de verre ne soit touché mécaniquement ou supporté mécaniquement autrement que par le matériau en verre inorganique, ou soit en contact avec un quelconque autre matériau, à l'exception d'un bain liquide de flottage, lequel bain liquide de flottage pourrait être en contact avec le feuil de verre du côté opposé au côté sur lequel le film de polymère est appliqué, et le feuil de verre a une épaisseur inférieure à 20 µm.

2. Procédé selon la revendication 1, dans lequel le feuil de verre a une épaisseur de 1-15 µm.

3. Procédé selon la revendication 1 ou 2, dans lequel le feuil de verre a une forme plate.

4. Procédé selon la revendication 1 ou 2, dans lequel le feuil de verre a une forme cylindrique.

5. Procédé selon la revendication 4, dans lequel une pression est appliquée à l'intérieur de la forme cylindrique.

6. Procédé selon la revendication 4 ou 5, dans lequel le film de polymère est appliqué à l'extérieur du feuil de verre cylindrique.

7. Procédé selon l'une quelconque des revendications 1-6, le procédé étant effectué sous forme d'un procédé continu.

8. Procédé selon l'une quelconque des revendications 1-7, dans lequel l'application du film de polymère est combinée avec l'application d'une couche adhésive.

9. Procédé selon l'une quelconque des revendications 1-8, dans lequel le film de polymère est appliqué par application d'une composition de revêtement suivie du durcissement de la composition de revêtement.

10. Procédé selon la revendication 9, dans lequel la composition de revêtement a une viscosité, à la température à laquelle elle est appliquée, d'au maximum 1000 cP.

11. Procédé selon la revendication 9 ou 10, dans lequel la composition de revêtement est une composition de revêtement durcissable par rayonnement ou une composition durcissable par peroxyde et le film de polymère est formé par durcissement par rayonnement respectivement par chauffage.

12. Procédé selon l'une quelconque des revendications 9-11, dans lequel la composition de revêtement comprend un promoteur d'adhérence.

13. Procédé selon l'une quelconque des revendications 9-12, dans lequel la composition de revêtement comprend en outre un additif de renforcement du verre.

14. Procédé selon l'une quelconque des revendications 9-13, dans lequel la composition de revêtement est une composition de revêtement durcissable par UV comprenant des oligomères à fonction acrylate, un diluant, un agent de couplage silane et un photoinitiateur.
